# EUROPÄISCHE PATENTSCHRIFT

(11) **EP 1 538 354 B1**
(45) Veröffentlichungstag und Bekanntmachung des Hinweises auf die Patenterteilung: **23.12.2009**
(21) Anmeldenummer: 04028175.0
(22) Anmeldetag: 26.11.2004
(51) Int. Cl.: F16C 33/12, F16C 33/28

(54) **Gleitelement**
Sliding element
Elément lisse

(30) Priorität: 02.12.2003 DE 10356784
(43) Veröffentlichungstag der Anmeldung: 08.06.2005
(73) Patentinhaber: Zollern BHW Gleitlager GmbH & CO. KG, 38124 Braunschweig (DE)
(72) Erfinder: Engel, Ulrich, Dr., 31234 Edemissen (DE); Gust, Edgar, 38302 Wolfenbüttel (DE); Jahn, Peter, 38124 Braunschweig (DE); Kupetz, Rainer, 38162 Cremlingen (DE); Reimer, Frank, 38162 Cremlingen (DE); Schurig, Hans Joachim, 38820 Halberstadt (DE)
(74) Vertreter: Lins, Edgar

(56) Entgegenhaltungen:
- DE-A1- 3 224 751
- DE-A1- 4 406 191
- DE-B- 1 134 519
- GB-A- 658 907
- GB-A- 664 651
- US-A- 4 508 158
- US-A- 5 447 774
- US-A1- 2002 154 991
- PATENT ABSTRACTS OF JAPAN Bd. 018, Nr. 455 (E-1595), 24. August 1994 (1994-08-24) -& JP 06 141514 A (NIPPONDENSO CO LTD), 20. Mai 1994 (1994-05-20)
- PATENT ABSTRACTS OF JAPAN Bd. 004, Nr. 166 (C-031), 18. November 1980 (1980-11-18) -& JP 55 106230 A (SHOWA ELECTRIC WIRE & CABLE CO LTD), 14. August 1980 (1980-08-14)

## Beschreibung

Die Erfindung betrifft ein Gleitelement bestehend aus einem Grundkörper, der mit einer Gleitschicht aus einem Gleitmaterial beschichtet ist.

Derartige Gleitelemente werden beispielsweise als Gleitlager für große Maschinen, beispielsweise für große langsam laufende Verbrennungsmotoren verwendet. Die Gleitschicht besteht dabei üblicherweise aus einem Gleitmetall, das aus unterschiedlich zusammengesetzten Legierungen bestehen kann, um gewünschte tribologische Eigenschaften zu gewährleisten. Die in Frage kommenden tribologischen Eigenschaften, für die eine Optimierung der Gleitschicht herbeigeführt wird, sind beispielsweise Anpassungsfähigkeit, Einbettfähigkeit von Fremdkörpern, gute Notlaufeigenschaften, Verschleißfestigkeit und hohe Dauerfestigkeit.

Eine häufig verwendete Gruppe der Gleitmetalle, hauptsächlich bestehend aus Zinn, Blei, Antimon und Kupfer, wird unter dem Begriff "Weißmetalle" zusammengefasst. Weißmetalle besitzen aufgrund der stofflichen Zusammensetzung eine relativ geringe Festigkeit, dafür aber eine ausgezeichnete Anpassungsfähigkeit und eine sehr gute Einbettfähigkeit von Partikeln, wenn eine ausreichende Schichtdicke vorhanden ist. Die Schichtdicke des Gleitmetalls bei konventionellen Weißmetallgleitschichten beträgt üblicherweise ca. 0,5 bis 5,0 mm. Die sehr gute Anpassungsfähigkeit und Einbettfähigkeit dieser Gleitmetalle führt jedoch bei relativ großen Schichtdicken zu einer geringen dynamischen Belastbarkeit.

Aufgrund der Entwicklungen auf dem Gebiet des Verbrennungsmotorenbaus werden immer höhere Motorenleistungen und höhere Drücke im Brennraum realisiert. Hieraus resultiert eine relevant steigende Anforderung an die Belastbarkeit der Gleitlager. Das Gleitlager bestimmt durch die begrenzte dynamische Belastbarkeit der Gleitschicht und den daraus resultierenden geometrischen Abmessungen die Baugröße einer Maschine und damit die Herstellungskosten in erheblichem Maße. Das Ziel der Gleitlagerentwicklung besteht deshalb darin, Gleitlager mit hoher dynamischer Belastbarkeit und dementsprechend geringen Abmessungen zu erhalten, die trotzdem ausreichende Anpassungsfähigkeit und Einbettfähigkeit für Partikel aufweisen. Die Einbettfähigkeit ist wichtig, damit die Gleitlagerschicht durch im Schmieröl mitgeführte Partikel nicht funktional beschädigt wird.

Es ist bekannt, dass mit einer deutlichen Verringerung der Gleitschichtdicke unterhalb von ca. 0,2 mm bei Weißmetallen ein deutlicher Anstieg der dynamischen Belastbarkeit der Gleitschicht eintritt. Insbesondere bei Gleitlagern für die genannten großen Verbrennungsmotoren und anderen Maschinen, in denen ungehärtete Wellen Verwendung finden müssen und bei denen relativ hohe Anforderungen an die Anpassungsfähigkeit und die Einbettfähigkeit von Partikeln gestellt werden, verbietet sich jedoch die Reduzierung der Dicke der Gleitmetallschicht oder die Verwendung von Gleitmetallen mit höherer Festigkeit und Härte und somit größerer dynamischer Belastbarkeit.

In der DE 44 06 191 A ist in einem Zylinderkurbelgehäuse ein hohlzylinderförmiger Formkörper angeordnet, der von untereinander verbundenen Hohlräumen und Kanälen durchsetzt ist und aus einem harten Stoff, z.B. einer Metalllegierung mit einem Volumenanteil von 5 bis 50% besteht. Die Hohlräume sind mit Leichtmetall als Gleitmetall ausgefüllt und nehmen in einem Ausführungsbeispiel ein Volumen von etwa 75% ein.

Aus der GB 664 651 A ist ein Gleitlager bekannt, wobei auf eine Stützschale eine Gleitschicht bestehend aus einer Zwischenräume bildenden Stützstruktur aus einem Drahtgeflecht aus Kupfer und einem Gleitmetall zum Ausfüllen der Zwischenräume gebildet ist. Der Gewichtsanteil des Kupfergeflechts ist 10% bis 70% und in einer bevorzugten Ausführungsform (für Dieselmotoren) sind etwa 30% des Kupfergeflechts in einer Blei oder Zinn basierten Gleitmetallmatrix vorgesehen.

Aus der JP 06 141 514 A ist ein Gleitlagermaterial bekannt, wobei als Stützstruktur ein Metallschaum mit einer Porosität von mindestens 90% vorgesehen ist. Für die Stützstruktur werden Kupfer, Nickel, Blei und Zinn vorgeschlagen.
Als Gleitmaterial ist Kunststoff, z.B. auf Phenol-Basis vorgesehen, wobei ggf. Blei als Füllstoff zugefügt werden kann.

Der vorliegenden Erfindung liegt die Problemstellung zugrunde, ein Gleitelement, das insbesondere als Gleitlager für große Maschinen verwendbar ist, so auszubilden, dass sowohl eine gute Einbettfähigkeit von Partikeln gewährleistet ist als auch eine verbesserte dynamische Belastbarkeit erreicht wird.

Ausgehend von dieser Problemstellung ist erfindungsgemäß ein Gleitelement bestehend aus einem Grundkörper, der mit einer Gleitschicht aus einem Gleitmaterial beschichtet ist, vorgesehen, wobei
- die Gleitschicht wenigstens teilweise aus einer Zwischenräume bildenden Stützstruktur aus einem offenporigen Metallschaum in Kombination mit einem Gleitmetall gebildet ist,
- das Volumen der Zwischenräume gegenüber dem Volumenanteil der Stützstruktur größer als 70% ist,
- die Zwischenräume der Stützstruktur durch das Gleitmetall ausgefüllt sind und
- das Material der Stützstruktur selbst geeignete tribologische Eigenschaften und eine höhere Festigkeit als das Gleitmetall aufweist.

Die erfindungsgemäße Gleitschicht besteht somit aus zwei Bestandteilen, von denen eine ein Gleitmetall ist und die andere eine die Zwischenräume bildende Stützstruktur aus einem offenporigen Metallschaum ist. Das Gleitmetall füllt dabei die Zwischenräume der Stützstruktur aus. Ergänzend kann die Stützstruktur durch eine Laufschicht abgedeckt sein. Das Gleitmaterial kann die gewünschten günstigen tribologischen Eigenschaften aufweisen, wobei die dynamische Belastbarkeit der Gleitschicht durch die festigkeitsstabilisierende Stützstruktur verbessert wird. In Verbindung mit der die Stützstruktur abdeckenden Laufschicht ermöglicht die Stützstruktur eine Ausbildung einer dünnen Schicht des Gleitmaterials, wodurch bereits durch die geringe Dicke der Laufschicht eine Verbesserung der dynamischen Belastbarkeit erreicht werden kann. Die höhere Festigkeit der Stützstruktur kann in statischer mechanischer Hinsicht, aber auch in dynamischer, thermischer und/oder chemischer Hinsicht gegeben sein.

Das Füllen der Zwischenräume der Stützstruktur durch das Gleitmaterial kann in verschiedenen Verfahren erfolgen, beispielsweise in Gießverfahren oder Spritzverfahren. Dabei ist es zweckmäßig, wenn das Material der Stützstruktur einen höheren Schmelzpunkt aufweist als das in die Zwischenräume eingebrachte Gleitmaterial.

Die erfindungsgemäße Ausbildung der Gleitschicht mit einer Stützstruktur kann ggf. sinnvoll auf einen oder mehrere Bereiche, beispielsweise einen oder mehrere besonders belastete Bereiche, der Gleitschicht beschränkt sein.

Der Volumenanteil des Materials der Stützstruktur beträgt in der Gleitschicht vorzugsweise weniger als 10 %, sodass der Volumenanteil der Zwischenräume der Stützstruktur zum Volumenanteil des Materials größer als 90 % ist. Wenn die Zwischenräume dabei mit Gleitmaterial ausgefüllt sind, überwiegt das Gleitmaterial an der Oberfläche der Gleitschicht und bestimmt somit in erwünschter Weise die tribologischen Oberflächeneigenschaften der Gleitschicht.

Wenn die Stützstruktur durch eine Laufschicht aus Gleitmaterial abgedeckt wird, kann diese Laufschicht vorzugsweise aus einem Material gebildet sein, das sich mit dem Material, mit dem Zwischenräume der Stützstruktur ausgefüllt sind, gut verbindet. Vorzugsweise ist dies der Fall, wenn die Laufschicht aus demselben Material gebildet ist, wie das Gleitmaterial, mit dem Zwischenräume der Struktur gefüllt sind.

Zur Verbesserung der Verbindung zwischen Gleitmaterial und dem Material der Stützstruktur kann es zweckmäßig sein, das Material der Stützstruktur mit einer die Verbindung zum Gleitmaterial verbessernden Vermittlerbeschichtung zu versehen. Hierfür in Frage kommende Materialien, wie z. B. eine Nickelbeschichtung, sind dem Fachmann ohne Weiteres bekannt.

Die Erfindung soll im Folgenden anhand von in der Zeichnung dargestellten Ausführungsbeispielen näher erläutert werden. Es zeigen:
- Figur 1: einen Schnitt durch eine erste Ausführungsform eines erfindungsgemäßen Gleitelements
- Figur 2: einen Schnitt durch eine zweite Ausführungsform eines erfindungsgemäßen Gleitelements.

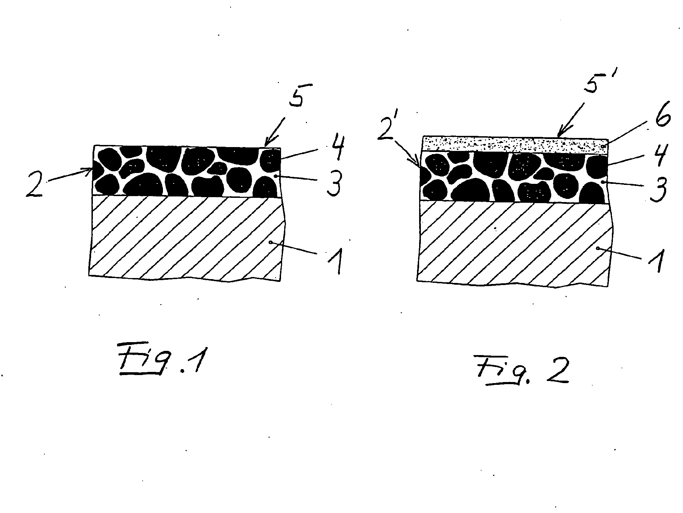

Das in Figur 1 dargestellte Gleitelement besteht aus einem Grundkörper 1 und einer Gleitschicht 2, wobei die Gleitschicht 2 durch eine Stützstruktur 3 gebildet ist, die zahlreiche Hohlräume ausbildet, die ihrerseits mit einem Gleitmaterial 4 gefüllt sind.

Die Stützstruktur 3 ist aus einem Metall gebildet, das, durch Schäumen eine skelettartige Struktur mit den zahlreichen untereinander verbundenen Hohlräumen aufweist.

Figur 1 lässt erkennen, dass der Volumenanteil der Hohlräume wesentlich größer ist als der Volumenanteil des Materials der Stützstruktur 3, sodass an der jeweiligen Oberfläche 5 (die sich aufgrund eines Materialabtrages während der Benutzung ändern kann) ein deutlich überwiegender Flächenanteil des Gleitmaterials 4 vorhanden ist. Das Material der Stützstruktur 3 sollte ebenfalls günstige tribologische Eigenschaften aufweisen, da ein Teil der Oberfläche 5 durch das Material der Stützstruktur gebildet wird.

Zur Optimierung des Einlaufverhaltens kann auf die Ausführungsform gemäß Figur 2 zurückgegriffen werden. Die dortige Gleitschicht 2' unterscheidet sich von der Gleitschicht 2 der Figur 1 nur dadurch, dass eine zusätzliche, die Stützstruktur 3 abdeckende Laufschicht 6 vorgesehen ist.

Als Laufschicht 6 können alle bekannten Laufschichten eingesetzt werden, wie sie als Laufschichten auf Weißmetall-Gleitschichten bereits bekannt sind. In Verbindung mit dem die Hohlräume auf der Stützstruktur 3 ausfüllenden Gleitmaterial 4 sollte das Material der Laufschicht 6 gut mit dem Gleitmaterial 3 verbindbar sein. Vorzugsweise kann die Laufschicht 6 aus demselben Material gebildet sein, mit dem die Hohlräume der Stützstruktur 3 ausgefüllt sind.

Die Dicke der Laufschicht 6 kann erfindungsgemäß so gering gehalten werden, dass eine hohe dynamische Belastbarkeit auch der Laufschicht 6 selbst, gewährleistet wird.

## Patentansprüche

1. Gleitelement, bestehend aus einem Grundkörper (1), der mit einer Gleitschicht (2, 2') aus einem Gleitmaterial beschichtet ist, wobei die Gleitschicht (2, 2') wenigstens teilweise aus einer Zwischenräume bildenden Stützstruktur (3) aus einem offenporigen Metallschaum in Kombination mit einem Gleitmetall (4) gebildet ist, das Volumen der Zwischenräume gegenüber dem Volumenanteil der Stützstruktur (3) größer als 70 % ist, die Zwischenräume der Stützstruktur (3) durch das Gleitmetall (4) ausgefüllt sind und das Material der Stützstruktur (3) selbst geeignete tribologische Eigenschaften und eine höhere Festigkeit als das Gleitmetall (4) aufweist.

2. Gleitelement nach Anspruch 1, **dadurch gekennzeichnet, dass** der Volumenanteil der Zwischenräume zu dem Volumenanteil des Materials der Stützstruktur (3) größer als 90 % ist.

3. Gleitelement nach Anspruch 1 oder 2, **dadurch gekennzeichnet, dass** das Material der Stützstruktur (3) eine die Bindung zum Gleitmaterial (4) verbessernde Vermittlerbeschichtung aufweist.

4. Gleitelement nach einem der Ansprüche 1 bis 3, **dadurch gekennzeichnet, dass** die Stützstruktur (3) durch eine Laufschicht (6) aus Gleitmaterial abgedeckt ist.

5. Gleitelement nach Anspruch 4, **dadurch gekennzeichnet, dass** die Laufschicht (6) aus Gleitmetall besteht.

6. Gleitelement nach Anspruch 5, **dadurch gekennzeichnet, dass** die Laufschicht (6) aus dem Gleitmetall gebildet ist, mit dem die Zwischenräume der Stützstruktur (3) gefüllt sind.

7. Gleitelement nach einem der Ansprüche 4 bis 6, **dadurch gekennzeichnet, dass** die Laufschicht eine Dicke von < 0,2 mm aufweist.

## Claims

1. Sliding element, consisting of a basic body (1) which is coated with a sliding layer (2, 2') consisting of a sliding material, the sliding layer (2, 2') being formed at least partially from a supporting structure (3) which forms interspaces and consists of an open-pored metal foam in combination with a sliding metal (4), the volume of the interspaces in relation to the fraction by volume of the supporting structure (3) being greater than 70%, the interspaces for the supporting structure (3) being filled by the sliding metal (4), and the material of the supporting structure (3) itself having suitable tribological properties and a higher strength than the sliding metal (4).

2. Sliding element according to Claim 1, **characterized in that** the fraction by volume of the interspaces in relation to the fraction by volume of the material of the supporting structure (3) is greater than 90%.

3. Sliding element according to Claim 1 or 2, **characterized in that** the material of the supporting structure (3) has a promoter coating improving the binding with respect to the sliding metal (4).

4. Sliding element according to one of Claims 1 to 3, **characterized in that** the supporting structure (3) is covered by a running layer (6) consisting of sliding material.

5. Sliding element according to Claim 4, **characterized in that** the running layer (6) consists of sliding metal.

6. Sliding element according to Claim 5, **characterized in that** the running layer (6) is formed from the sliding metal with which the interspaces of the supporting structure (3) are filled.

7. Sliding element according to one of Claims 4 to 6, **characterized in that** the running layer has a thickness of < 0.2 mm.

## Revendications

1. Elément de glissement, sous la forme d'un corps de base (1) recouvert d'une couche de glissement (2, 2') en un matériau de glissement, dans lequel la couche de glissement (2, 2') est formée au moins en partie par une structure porteuse (3) à cavités internes réalisée en une mousse métallique à cellules ouvertes combinée avec un métal de glissement (4), le volume des cavités représente un ratio de plus de 70% par rapport au volume de la structure porteuse (3), les cavités internes de la structure porteuse (3) sont remplies par le métal de glissement et le matériau de la structure porteuse (3) présente lui-même des propriétés tribologiques adaptées et une résistance plus élevée que le métal de glissement.

2. Elément de glissement selon la revendication 1, **caractérisé en ce que** la part de volume des cavités par rapport au matériau de la structure porteuse (3) est supérieure à 90%.

3. Elément de glissement selon l'une quelconque des revendications 1 ou 2, **caractérisé en ce que** le matériau de la structure porteuse (3) présente une enduction adhésive d'amélioration de la liaison avec le matériau de glissement (4).

4. Elément de glissement selon l'une quelconque des revendications 1 à 3, **caractérisé en ce que** la structure porteuse (3) est recouverte par une couche de roulement (6) en matériau de glissement.

5. Elément de glissement selon la revendication 4, **caractérisé en ce que** la couche de roulement (6) est en métal de glissement.

6. Elément de glissement selon la revendication 5, **caractérisé en ce que** la couche de roulement (6) est réalisée avec le même métal de glissement que celui dont sont remplies les cavités internes de la structure porteuse (3).

7. Elément de glissement selon l'une quelconque des revendication 4 à 6, **caractérisé en ce que** la couche de roulement (6) présente une épaisseur inférieure à 0,2 mm.
